# EUROPEAN PATENT APPLICATION

(11) **EP 4 475 370 A1**
(43) Date of publication of application: **11.12.2024**
(21) Application number: 24175886.1
(22) Date of filing: 15.05.2024
(51) Int. Cl.: H02J 3/12, H01F 29/04, H02J 3/18

(54) **REACTOR ARRANGEMENT AND DEVICE**

(30) Priority: 31.05.2023 GB 202308135
(71) Applicant: Siemens Energy Global GmbH & Co. KG, 81739 München (DE); Siemens Energy Austria GmbH, 1210 Wien (AT)
(72) Inventor: Schweiger, Ewald, 90763 Fürth (DE); Höfler, Martin, 8223 Stubenberg (AT); Feichtinger, Erwin, 8223 Stubenberg (AT)
(74) Representative: Roth, Thomas

(57) **Abstract**

The invention relates to a reactor arrangement (2) for compensating reactive power in an alternating voltage network, the reactor arrangement (2) comprising a shunt reactor (5), which has a plurality of windings (6) and a connection at one end for connecting the shunt reactor (5) to an alternating voltage conductor, and an on-load tap-changer (21), which is designed and arranged to adjust the reactance of the shunt reactor (5) under load, wherein the reactor arrangement (2) further comprises a switching device (7), which cannot be actuated under load and which is designed and arranged to selectively bridge a section of the shunt reactor (5) located in particular in the vicinity of the connection in order to change the effective number of windings (6) of the shunt reactor (5) and to adapt the reactor arrangement (2) to different voltages in the alternating voltage network.

## Description

The present invention relates to a reactor arrangement for compensating reactive power in an alternating voltage network, the reactor arrangement comprising a shunt reactor, which has a plurality of windings and a connection at one end for connecting the shunt reactor to an alternating voltage conductor, and an on-load tap-changer, which is designed and arranged to adjust the reactance of the shunt reactor under load.

Furthermore, the invention relates to a device for compensating the reactive power in an alternating voltage network.

Such alternating voltage or alternating current (AC) networks often comprise inductive or capacitive elements which create a phase shift between the alternating voltage and the alternating current. Such a shift leads to a reactance or a reactive part of impedance, which reduces the efficiency of the transmission of electric power.

In order to reduce or compensate the power losses due to a reactance in the alternating voltage network, specific reactor arrangements can be integrated into such a network. Commonly, such reactor arrangements comprise a shunt reactor having a plurality of windings, one end of which shunt reactor is connected to an alternating voltage conductor. In order to adjust the reactance or reactive part of the impedance of such a shunt reactor, an on-load tap-changer may be provided. Such a tap-changer is designed and arranged to adjust the reactance of the shunt reactor under load. In concrete terms, a plurality of contacts may be provided at the shunt reactor and selectively one of the contacts may be electrically connected to a ground potential.

Such reactor arrangements have proven themselves in principle. However, it is sometimes considered as disadvantageous that such a reactor arrangement can only be used for one specific application and site of operation. Correspondingly, the range of application is restricted to a specific voltage level in the network and a specific power range.

It is an object of the present invention to provide an alternative reactor arrangement which can be used in a more flexible manner.

This object is solved by a reactor arrangement mentioned at the beginning in that the reactor arrangement further comprises a switching device, which cannot be actuated under load and which is designed and arranged to selectively bridge a section of the shunt reactor located in particular in the vicinity of the connection in order to change the effective number of windings of the shunt reactor and to adapt the reactor arrangement to different voltages in the alternating voltage network.

The invention is based on the consideration to provide a possibility for a user to adapt the reactor arrangement to different voltage levels by means of a specific switching device. In this way, the effective number of windings of the shunt reactor can be varied such that the reactor arrangement can be adapted to networks having different voltage levels. In this way it is no more necessary to design or manufacture or provide separate reactor arrangements for each different voltage level.

Accordingly, the number of different spare parts can be reduced significantly for an energy network operator.

A number of windings may be assigned to each tap or contact of the shunt reactor. As the inductivity and thus the reactance of a shunt reactor depend on the number of windings, which the current passes or flows, the location of the tap or contact determines the effective number of windings and thus the reactance, i.e. the reactive part of the impedance, of the shunt reactor.

Preferably, the switching device is arranged such that it cannot be actuated under load. This means that the reactor arrangement has to be electrically separated from the network in order to be able to actuate the switching device.

According to a preferred embodiment, the shunt reactor has a branch-off tap and at least two, in particular exactly two return taps, the return taps being arranged at different locations of the shunt reactor, and the switching device is designed in such a way that the branch-off tap can selectively be electrically connected to one of the return taps. In other words, the shunt reactor may have different taps, one of them serving as a branch-off tap leading to the switching device and at least two of them serving as return taps leading from the switching device back to the shunt reactor. The two return taps leading back to the shunt reactor are arranged at different positions of the shunt reactor. In other words, between the two return taps, a number of windings is arranged, which can be selectively bridged. Accordingly, by means of the switching device, a connection can be switched between the branch-off tap and one of the two return taps. The branch-off tap and/or the return taps may be arranged at the windings.

In concrete terms, the switching device may comprise an input port, which is electrically connected to the branch-off tap, at least two, in particular exactly two output ports, which are arranged at a distance therefrom and are each electrically connected to a return tap of the shunt reactor, and a connecting element, which can be plugged onto the input port and selectively onto one of the output ports in order to electrically connect the input port to the respective output port. In other words, a connecting element is provided which can be connected to one input port and to one of the plurality of output ports in order to electrically connect the input port to one of the output ports.

The connecting element may be a C-shaped connecting element. Accordingly, the arrangement may be such that the C-legs of the connecting element can be plugged onto the input port and one of the output ports. The C-legs of the connecting elements may be arranged parallel to each other and the input port and the output ports may correspondingly also be arranged parallel to each other. The input port and/or the output ports may be surrounded by an insulation material, in particular in the form of an insulation sleeve. The input port and/or the output ports may have a receiving opening in particular having a circular cross-section in order to accommodate the C-legs or a part of the C-legs of the connecting element.

The input port may be arranged centrally between the output ports. Accordingly, the output ports may be arranged at the same distance from the input port, so that one connecting element may be used for selectively connecting one of the output ports to the input port. Preferably, the input port and the output ports are located in one line. The input port and the output ports can be held on or fixed to a support element, which is preferably made of laminated wood.

According to a further embodiment of the invention, the on-load tap-changer may comprise a load selector switch by means of which a section of the shunt reactor can be selectively bypassed. Such a load selector switch, which may also be referred to as selector switch, allows to vary the effective number of windings of the shunt reactor. In this way, a rough adjustment of the power settings can be achieved.

In concrete terms, corresponding switch contacts may be provided at the shunt reactor, in particular at the windings of the shunt reactor. These may be electrically connected to the load selector switch, so that selectively a section of the shunt reactor, in particular a section of the windings of the shunt reactor, can be bypassed.

In a manner known per se, the on-load tap-changer may further comprise a load change-over switch which can be selectively coupled to one of a plurality of contacts on the shunt reactor to establish a connection to ground potential and to adjust the effective number of windings of the shunt reactor. By means of such a load change-over switch, a fine adjustment of the power settings of the reactor arrangement can be realized. The load change-over switch may also be referred to as diverter switch. The load change-over switch may comprise a secondary switch allowing to switch between two adjacent contacts.

According to a preferred embodiment, the shunt reactor may comprise an iron air core and a coil surrounding the iron air core. Of course, other materials than iron are also conceivable. The coil may form the windings of the shunt reactor. Preferably, the windings are arranged concentrically with respect to the iron air core and are tensioned between yokes or braces. The windings may be surrounded by an isolation material, which may be in particular paper impregnated by and/or dipped into oil.

The object is also solved by a device for compensating the reactive power in an alternating voltage network with at least one, in particular three, reactor arrangements as described above and a housing which surrounds the at least one reactor arrangement.

This embodiment is based on the consideration to provide the reactor arrangement(s) inside of a housing in order to protect the environment against current flowing in the windings of the shunt reactor(s).

Preferably, the housing is filled or fillable with a liquid, in particular with oil, said liquid surrounding the at least one reactor arrangement. On one hand, the presence of a liquid, in particular oil, serves to protect against disruptive discharges which may appear when significant electrical currents or voltages are present. Furthermore, a liquid serves to dissipate heat energy, which may appear in the shunt reactor(s), in a very efficient manner. The housing may have radiating surfaces to transfer the heat energy to the environment. In concrete terms, the housing may have projections and recesses in order to increase the radiating surface. The housing may also have at least in section a corrugated or a grooved surface.

Preferably, the switching device(s) of the shunt reactor(s) is/are arranged in an upper section of the device. Accordingly, if the housing is filled with a liquid, only a part of the liquid has to be removed before access to the switching device(s) is possible.

In concrete terms, the housing may have on a top side an access opening closed or closable by a cover, below which the input ports and the output ports of the at least one reactor arrangement are located. Such an opening arranged in particular on a top side of the housing allows an easy and simple access to the switching device(s).

In concrete terms, the switching devices of the reactor arrangements may be positioned next to each other and the input ports and/or the output ports may be arranged such that the connecting elements may be plugged onto them from the top.

Preferably, each reactor arrangement may be connected to an alternating voltage conductor.

With regard to the embodiment of the invention, reference is also made to the subclaims and to the following description of an embodiment with reference to the attached drawing. The drawing shows as follows:
Figure 1 a device for compensating the reactive power in an alternating voltage network according to the invention in a perspective view;
Figure 2 the switching devices of the device of figure 1 in a detailed perspective view; and
Figure 3 the circuit diagram of the reactor arrangements of the device of figure 1.

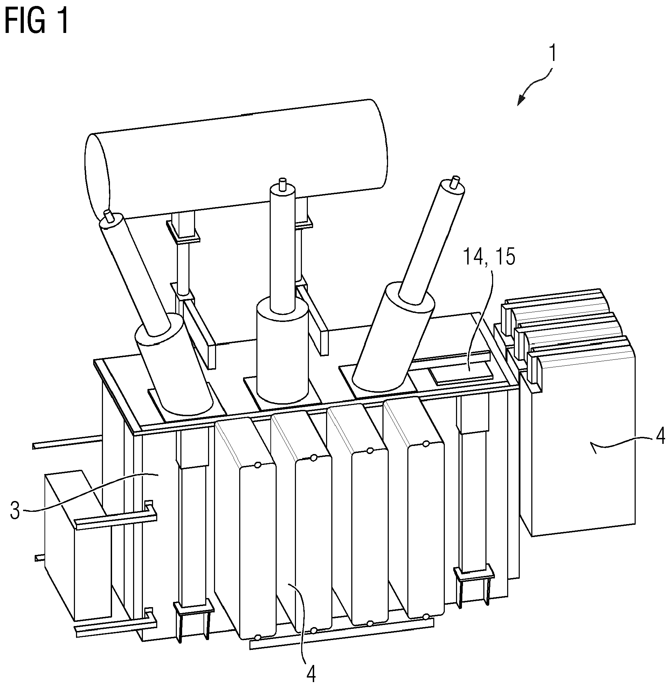

Figure 1 shows a device for compensating the reactive power in an alternating voltage network according to the invention. The device 1 comprises exactly three reactor arrangements 2, which are arranged parallel to each other and are preferably designed identically. Furthermore, the device 1 comprises a housing 3 surrounding the reactor arrangements 2. The housing 3 has a plurality of radiating surfaces 4 for exchanging heat energy to the outside and is filled or fillable with oil.

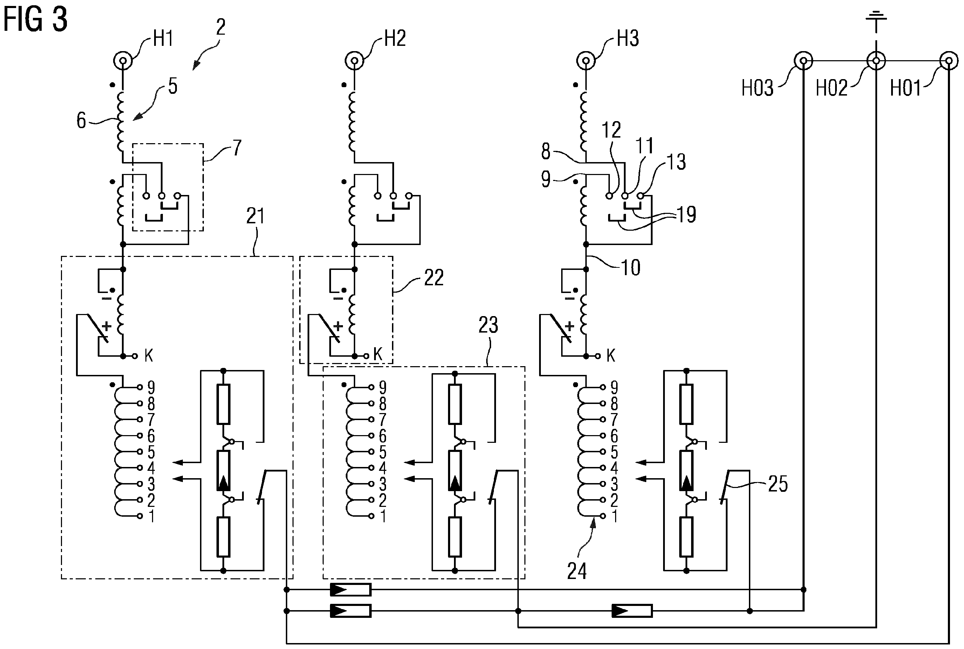

The detailed embodiment of the reactor arrangement 2 is shown in figure 3. Each reactor arrangement 2 comprises a shunt reactor 5 extending in figure 3 from the top to the bottom. Each shunt reactor 5 has a plurality of windings 6 and is connected as its upper end to an alternating voltage conductor (H1, H2, H3). The windings 6 form one continuous coil extending in figure 3 from the top to the bottom.

In its upper region, each reactor arrangement 2 comprises a switching device 7. This switching device cannot be actuated under load and is designed and arranged to selectively bridge a section of the shunt reactor 5. In this way, the effective number of windings 6 can be changed so that the reactor arrangement 2 can be adapted different voltage levels in the alternating voltage network.

In concrete terms, each shunt reactor 5 has a branch-off tap 8 and two return taps 9, 10. Return taps 9, 10 are arranged in figure 3 below the branch-off tap 8 at different locations of the shunt reactor 5. The switching device 7 is designed in such a way that the branch-off tap 8 can selectively be electrically connected to one of the return taps 9, 10. For this purpose, the switching device 7 has an input port 11 and two output ports 12, 13, wherein the input port 11 is arranged centrally between the output ports 12, 13.

The switching devices 7 of the reactor arrangements 2 are located below an access opening 14 formed in the housing 3 on a top side thereof, which access opening 14 is closed in figure 1 by a cover 15.

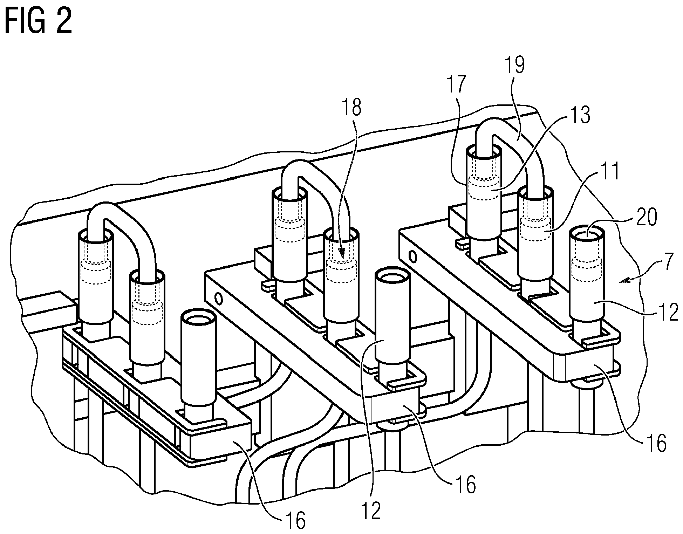

The detailed embodiment of the switching device 7 inside the housing 3 is shown in figure 2. Each reactor arrangement 2 is assigned a support element 16, which is presently made of laminated wood. Each support element 16 carries the input port 11 arranged in the middle and two output ports 12, 13. Each port is surrounded by an insulation sleeve 17, presently having a thickness of 2 mm. Preferably, a few layers of thermostabilized paper may be provided over the insulation sleeves 17.

Each port 11, 12, 13 has a receiving opening 18, with a circular cross-section.

The switching devices each further comprise a c-shaped connecting element 19, which is plugged onto the input port 11 and one of the output ports 13 in order to electrically connect the input port 11 to the respective output port 13. The C- legs of the connecting element 19 extend into the receiving opening 18 of the input port 11 and the output port 13. In the output port 12, onto which no connecting element 19 is plugged in the situation shown in figure 2, a blind connector 20 is provided.

In the embodiment shown in figures 1 to 3, plugging the connecting element 19 selectively onto one of the output ports 12, 13 allows to switch the reactor arrangement 12 between an operating alternating voltage of 115 kV and 161 kV by bridging a section of the shunt reactor 5.

Furthermore, each reactor arrangement 2 further comprises an on-load tap-changer 21, which is arranged in figure 3 below the switching device 7. This on-load tap-changer 21 is designed and arranged to adjust the reactance of the shunt reactor 5 under load. This means, that the shunt reactor 5 need not to be separated from the conductor and the oil filled in the housing 3 must not be removed when the on-load tap-changer 21 is actuated.

In concrete terms, the on-load tap-changer 21 comprises a load selector switch 22 by means of which a section of the shunt reactor 5 can be selectively bypassed. As it is visable in Figur 3, the load selector switch 22 can be switched between two contacts designated "+" and "-".In other words, the load selector switch 22 may allow a rough or coarse adjustment of the power settings of the reactor arrangements 2.

Furthermore, each reactor arrangement 2 comprises a load change-over switch 23, which can be selectively coupled to one of a plurality of contacts 24 on the shunt reactor 5 to establish a connection to ground potential (H01, H02, H03) and to adjust the effective number of windings 6 of the shunt reactors 5. The load change switch 23 is shown in detail in the bottom of figure 3. The plurality of contacts 24, which are marked with 1 to K can be selectively coupled, i.e. electrically connected, to the load change-over switch 23. By means of such a load change-over switch 23, a fine adjustment of the effective number of windings 6 and thus of the properties of the shunt reactor 5 can be realized.

The load change-over switch 23 further comprises a secondary switch 25, which further allows to switch between two adjacent contacts 24.

If the device 1 shown in figure 1 should be adapted to another voltage level in the alternating voltage network, at first the reactor arrangements 2 must be separated from the alternating voltage conductor. After that, a part of the oil in the housing 3 surrounding the shunt reactors 5 must be removed so that the switching device 7 is accessible. Then, the cover 15 must be removed so that access to the switching device 7 is possible through the access opening 14.

The connecting element 19 must be removed from the output port 13 and the blind connector 20 must be removed from the output port 12. Then the connecting element 19 can be plugged onto the input port 11 and the output port 12, so that an electrical connection between the branch-off tap 8 and the return tap 9 is realized. Finally, the blind connector 20 must be plugged onto the output port 13.

After having realized these steps, the access opening 14 can be closed by mounting the cover 15 thereon and the housing 3 can be filled completely with oil.

In this way, a simple and easy adaption to another voltage level is possible. Consequently, a reactor arrangement 2 can be used for different voltage levels so that the number of parts to be produced, in particular spare parts, can be significantly reduced for the operator of an AC-network.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Regardless of the grammatical gender of a particular term, persons with male, female, or other gender identity are included.

### List of reference signs

- 1: device
- 2: reactor arrangement
- 3: housing
- 4: radiating surface
- 5: shunt reactor
- 6: winding
- 7: switching device
- 8: branch-off tap
- 9: return tap
- 10: return tap
- 11: input port
- 12: output port
- 13: output port
- 14: access opening
- 15: cover
- 16: support
- 17: insulation sleeve
- 18: receiving opening
- 19: connecting element
- 20: blind connector
- 21: on-load tap-changer
- 22: load selector switch
- 23: load change-over switch
- 24: contact
- 25: secondary switch

- H1: alternating voltage conductor
- H2: alternating voltage conductor
- H3: alternating voltage conductor

- H01: ground potential
- H02: ground potential
- H03: ground potential

## Claims

1. Reactor arrangement (2) for compensating reactive power in an alternating voltage network, the reactor arrangement (2) comprising
a shunt reactor (5), which has a plurality of windings (6) and a connection at one end for connecting the shunt reactor (5) to an alternating voltage conductor, and
an on-load tap-changer (21), which is designed and arranged to adjust the reactance of the shunt reactor (5) under load,
**characterized in that** the reactor arrangement (2) further comprises a switching device (7), which cannot be actuated under load and which is designed and arranged to selectively bridge a section of the shunt reactor (5) located in particular in the vicinity of the connection in order to change the effective number of windings (6) of the shunt reactor (5) and to adapt the reactor arrangement (2) to different voltages in the alternating voltage network.

2. Reactor arrangement (2) according to claim 1, **characterized in that** the shunt reactor (5) has a branch-off tap (8) and at least two, in particular exactly two return taps (10), the return taps (9, 10) being arranged at different locations of the shunt reactor (5), and the switching device (7) is designed in such a way that the branch-off tap (8) can selectively be electrically connected to one of the return taps (9, 10).

3. Reactor arrangement (2) according to claim 2, **characterized in that** the switching device (7) has an input port (11), which is electrically connected to the branch-off tap (8), and at least two, in particular exactly two output ports (12, 13), which are arranged at a distance therefrom and are each electrically connected to a return tap (9, 10) of the shunt reactor (5), and a connecting element (19), in particular a C-shaped connecting element (19), which can be plugged onto the input port (11) and selectively onto one of the output ports (12, 13) in order to electrically connect the input port (11) to the respective output port (12, 13).

4. Reactor arrangement (2) according to claim 3, **characterized in that** the input port (11) is arranged centrally between the output ports (12, 13).

5. Reactor arrangement (2) according to any of the preceding claims, **characterized in that** the on-load tap-changer (21) comprises a load selector switch (22) by means of which a section of the shunt reactor (5) can be selectively bypassed.

6. Reactor arrangement (2) according to any of the preceding claims, **characterized in that** the on-load tap-changer (21) comprises a load change-over switch (23) which can be selectively coupled to one of a plurality of drain-off contact (24) of the shunt reactor (5) to establish a connection to ground potential and to adjust the effective number of windings (6) of the shunt reactor (5) .

7. Reactor arrangement (2) according to any of the preceding claims, **characterized in that** the shunt reactor (5) comprises an iron core and a coil surrounding the core.

8. Device (1) for compensating the reactive power in an alternating voltage network with
- at least one, in particular exactly three, reactor arrangements (2) according to any of the preceding claims, and
- a housing (3) which surrounds the at least one reactor arrangement (2).

9. Device (1) according to claim 8, **characterized in that** the housing (3) is filled or fillable with a liquid, in particular with oil, said liquid surrounding the at least one reactor arrangement (2).

10. Device (1) according to claim 8 or 9, wherein the at least one reactor arrangement (2) is formed according to claim 3 or claim 4, **characterized in that** the housing (3) has on a top side an access opening closed or closable by a cover (15), below which the input ports (11) and the output ports (12, 13) of the at least one reactor arrangement (2) are located.

11. Device (1) according to any of claims 8 to 10, **characterized in that** each reactor arrangement (2) is connected to an alternating voltage conductor (H1, H2, H3) .
